# EUROPEAN PATENT SPECIFICATION

(11) **EP 1 731 257 B1**
(45) Date of publication and mention of the grant of the patent: **10.08.2016**
(21) Application number: 05253493.0
(22) Date of filing: 07.06.2005
(51) Int. Cl.: B23K 35/30, B23K 1/00, H02K 15/00, H02K 3/22, H02K 3/04

(54) **Brazed crevice corrosion-resistant liquid-cooled armature bar clip-to-strand connection and related method**
Risskorrosionsbeständige Lötverbindung zwischen einer flüssigkeitsgekühlten Armatur und Strängen und Verfahren zur Herstellung der Lötverbindung
Brasure résistant à la corrosion et à la fissuration entre une armature de cosse refroidie par liquide et des brins et son procédé de fabrication

(43) Date of publication of application: 13.12.2006
(73) Proprietor: GENERAL ELECTRIC COMPANY, Schenectady, NY 12345 (US)
(72) Inventor: Breznak, Jeffrey M., Waterford, NY 12188 (US); Iversen, Alan Michael, Clifton Park, NY 12065 (US); Hopeck, James Fredrick, Mechanicville, NY 12118 (US)
(74) Representative: Lee, Brenda

(56) References cited:
- US-A- 3 411 900
- US-A- 4 011 056
- US-A- 4 587 097
- US-A- 5 796 189
- US-B1- 6 784 573
- RUPERT W D: "BRAZE LIFE AFTER CADMIUM" WELDING JOURNAL, AMERICAN WELDING SOCIETY, MIAMI, FL, US, vol. 74, no. 11, 1 November 1995 (1995-11-01), pages 59-61, XP000587220 ISSN: 0043-2296

## Description

This invention relates generally to the manufacture of generators and, specifically, to improving the joint between a hydraulic header clip or fitting and a liquid cooled armature bar.

The armature windings of large steam-turbine generators are generally water-cooled. The armature windings are composed of half coils or armature bars connected at each end through copper or stainless steel fittings and water-cooled connection rings to form continuous hydraulic circuits. The hydraulic winding circuits are typically connected to inlet and outlet water manifolds with plastic hoses that provide electrical isolation. The manifolds are connected to the stator water cooling system which cools, filters and deionizes the water and pumps the water back to the armature winding. The armature bars are composed of rectangular copper strands arranged in rectangular bundles. All of the strands may be hollow, or the bundle may include a mixture of solid and hollow strands. The hollow stands thus have a duct for conducting cooling water. A braze alloy joins the strands to each other and to a waterbox header clip at each end of one of the armature bars. The clip functions to deliver water to and collect water from the hollow strands. The clip is connected through copper or stainless steel fittings to a second armature bar to form a complete armature coil element of the winding.

The braze joints between the strands and between the strands and the clip must retain hydraulic and electrical integrity for the expected lifetime of the winding. The braze alloy or filler metal that joins the strands and the strands to the clip is currently a self-fluxing copper-phosphorous alloy, also referred to as a BCuP alloy. This family of alloys typically contains 3½ - 7 weight percent phosphorous. The surface of the braze joint is constantly exposed to a deionized, oxygenated water environment.

It has become evident that the factors required to support a crevice corrosion mechanism in a clip-to-strand braze joint are phosphorous, copper, suitable corrosion initiation sites and water. If any one of these factors are eliminated, crevice corrosion should not occur. Corrosion of the phosphorous-containing braze alloy and adjoining copper strand surfaces can occur under certain conditions, specifically if critical crevice geometry and crevice water chemistry requirements are met. The corrosion process can initiate if the joint surface contains any surface crevices, pinholes, or porosity at or near the surface of the joint, and if the critical water chemistry conditions that can support corrosion develops within these sites. The corrosion process can progress through the braze joint as long as critical crevice geometry and water chemistry conditions exist. In addition, porosity within the braze joint can accelerate the total apparent corrosion rate. Eventually, the path of corrosion can result in a water leak through the entire effective braze joint length, compromising the hydraulic integrity of the clip-to-strand joint.

U.S. Patent 5,796,189 discloses an arrangement where all of the strands are cut to the same length and the copper-phosphorous (BCuP) braze alloy is pre-placed flush to the ends of the strands. A braze alloy anti-wetting agent is used on the ends of the hollow strands to prevent plugging of the hollow strands and an inert purge gas is used during the brazing cycle. Use of the anti-wetting agent, although effective for preventing hollow strand plugging, can result in strand faying surface contamination and a poor effective braze joint length.

US-B-6,784,573 teaches the use of extended hollow strands in combination with the use of a de-oxidizing gas as the purge gas. The extended hollow strands eliminate the need to use an anti-wetting agent on the ends of the hollow strands and the de-oxidizing purge gas limits oxidation during the brazing cycle, de-oxidizes strand surfaces and the braze alloy prior to alloy melting, and improves braze alloy wetting and flow. However, this practice continues the use of a phosphorous-containing braze alloy and, therefore, the potential for crevice corrosion still exists, although it is greatly minimized due to the significant reduction, or the elimination in most cases, of surface initiation sites.

This invention relates to a brazed connection of a liquid-cooled armature bar strand package to a hydraulic header clip that is not susceptible to crevice corrosion initiation, and a related method for manufacturing the connection.

Generally, the invention provides a non-crevice-corroding clip-to-strand braze joint using a braze alloy that is essentially phosphorous-free, one of the key factors of the known crevice corrosion mechanism. A braze alloy that is essentially phosphorous-free has a phosphorous content that is sufficiently low enough such that phosphorous-containing metallurgical phases that are susceptible to crevice corrosion cannot form. Generally, and for purposes of this discussion, alloys with less than 500 ppm (or 0.05 weight percent) phosphorous are considered essentially phosphorous-free. The benefits are expected to be improved generator availability and reliability.

Specifically, the invention employs extended hollow strands (relative to the solid strands) to avoid the need for a braze alloy anti-wetting agent on the ends of the hollow strands. Strips of a rolled, essentially phosphorous-free, copper-silver braze alloy are placed between the tiers of strands and between the strands and the internal surfaces of the header clip. Additional metal shims composed of copper or other suitable metal may be placed between the tiers to aid braze alloy retention. To further aid braze alloy retention, a temporary refractory sleeve may be placed around the strand package at the strand-to-clip interface and a spring-loaded chill clamp is used. The joint is brazed in a chamber under a controlled gas atmosphere to avoid the need for brazing fluxes. Optionally, a stick-form of the copper-silver alloy can be used to add additional filler metal to the braze joint during the brazing process.

The braze joint can be made with the axis of the armature bar in either a horizontal or a vertical orientation. The vertical orientation is preferred, however, because it aids alloy retention in the joint and permits pieces of the alloy to be more easily pre-placed on the surface of the assembly inside the hydraulic header clip, thereby providing a source of additional filler metal that will melt and flow over the surface to create a thicker layer of filler metal than would be possible with the armature bar in a horizontal orientation.

The copper-silver alloy can contain one or more other elements, such as tin, zinc or nickel, that can result in solidus and liquidus modifications to suit specific applications. In a less preferred embodiment of the manufacturing method, the brazement may be made in an atmosphere of air or an inert gas such as nitrogen or argon, along with the use of brazing fluxes when it is desirable to avoid brazing in a chamber with a controlled atmosphere.

Accordingly, in one aspect, the invention relates to a brazed joint, according to claim 1.

In another aspect, the invention relates to a method of forming a brazed joint, according to claim 4.

Embodiments of the invention will now be described, by way of example, with reference to the accompanying drawings, in which:
FIGURE 1 is a side elevation of an armature bar and header clip assembly;
FIGURE 2 is a side section, taken along the line 2-2 in Figure 3, of a header clip-to-strand connection in accordance with an exemplary embodiment of the invention;
FIGURE 3 is an end elevation of the connection shown in Figure 2; and
FIGURE 4 is a partial end elevation of a clip-to strand connection with metal shims between the tiers.

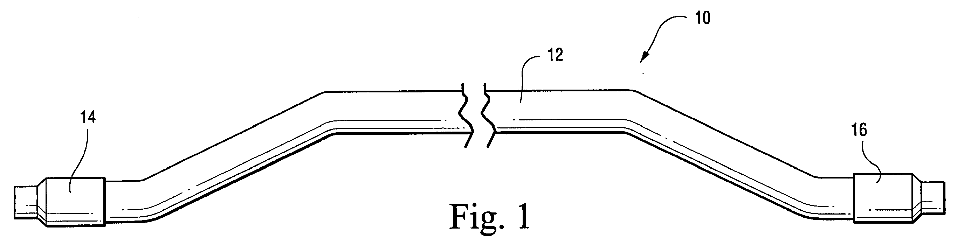

Referring now to Figure 1, a liquid-cooled stator winding used in a typical liquid-cooled generator includes a plurality of armature bars 10 (one shown), the center portion 12 of which is adapted to pass through radially extending slots in a stator core (not shown), terminating at opposite ends in hydraulic end fittings or header clips 14 and 16, respectively, typically formed of an electrically conductive material such as copper. Inlet hoses (not shown) connect the header clips 14, 16 to an inlet or outlet coolant header (also not shown).

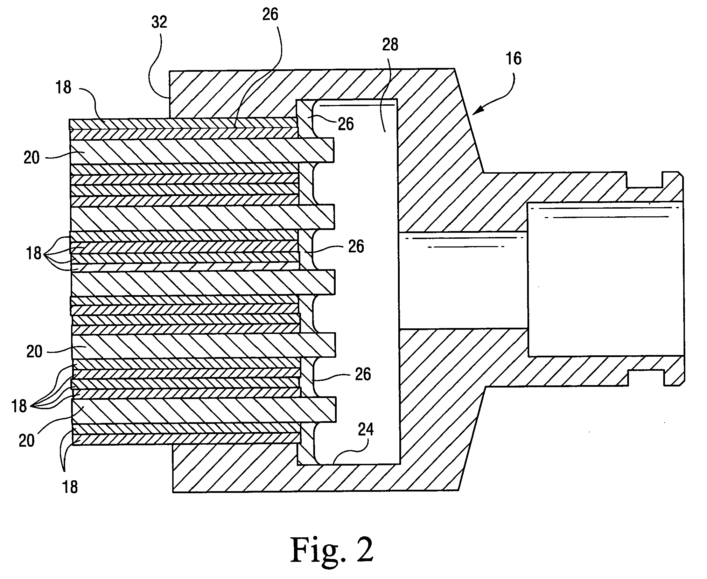

With reference also to Figure 2, the armature bar 10 is composed of many small rectangular solid and hollow copper strands 18, 20, respectively (Figure 2), that are brazed to the interior of the header clips 14, 16 as further described below. It will be appreciated that the strands 18, 20 may also be constructed of metals other than copper, such as copper-nickel alloys or stainless steel. Since the clips 16, 20 are identical, only clip 16 will be described in detail.

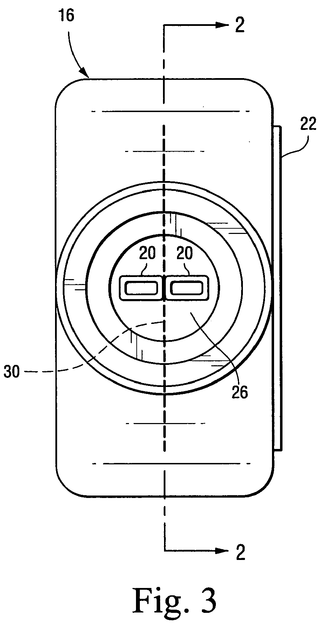

As best seen in Figures 2 and 3, the solid and hollow copper strands 18, 20 are disposed in side-by-side and superposed relation one to the other, in a generally rectangular, multi-tier array. The array may be compressed within the hydraulic end fitting or header clip 16 by means of a side plug 22 (Figure 3) fitted within a similarly shaped "window" cut-out of the header clip. The rows or tiers of strands 18, 20 within the stator bar are brazed to one another as well as to the interior surfaces 24 of the end fitting using a filler metal or braze alloy barrier coat 26. The braze alloy 26 preferably comprises an essentially phosphorous-free copper-silver alloy in rolled strip form. The latter facilitates placement of the alloy between the tiers of strands and between the strands and the internal surfaces of the end fitting or header clip.

The particular configuration of solid strands 18 and hollow strands 20 within the package may vary. For example, there may be a 1 to 1 ratio of solid strands to hollow strands, up to a ratio of, for example, 6 to 1 or more, depending on the capability of the bar design to remove heat during generator operation. Conversely, the package may contain all hollow strands. The arrangement of solid and hollow strands within the array may vary as well. Thus, while a two-tier array is shown in Figures 2 and 3, it will be appreciated that four and six or more tiers are possible.

The free ends of the hollow strands 20 extend axially beyond the corresponding free ends of the solid strands 18, projecting into an open cavity or manifold 28. The differential lengths of the solid and hollow strands may be achieved by any suitable means including the use of a specialized tool to shorten the solid strands. The filler metal or braze alloy 26 is pre-placed within the header clip 16 so as to surround the enclosed ends of the hollow and solid strands, but not to extend axially beyond the hollow strands 20. As best seen in Figure 2, the braze alloy barrier coat 26 extends axially along and between all sides of each of the strands 18, 20 in the array, and also covers the ends (or faying surfaces) of the solid strands 18 while leaving the ends of the hollow strands 20 open and unobstructed for free flow of coolant through the hollow strands.

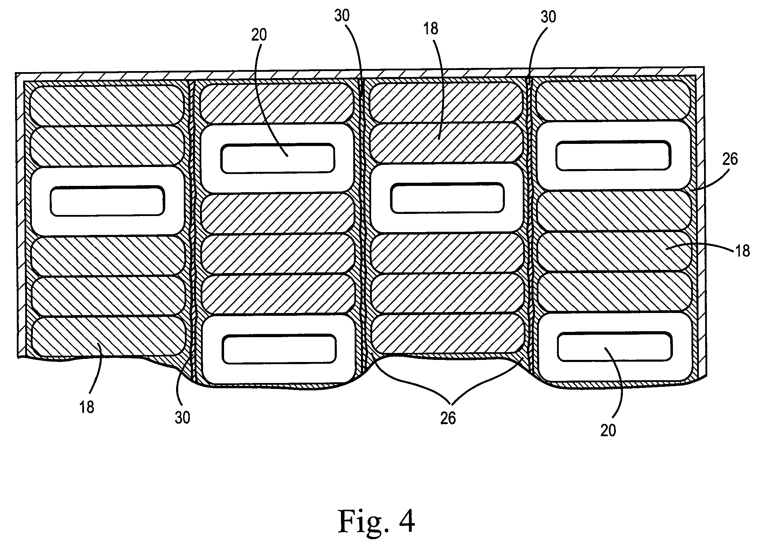

With reference to Figure 4, a multi-tier arrangement is illustrated showing how metal shims 30 composed of copper or other suitable metal may be placed between the tiers to aid braze alloy retention. These shims 30 extend axially to a location substantially flush with the back wall of the clip. A temporary refractory sleeve (not shown) may be placed around the strand package at the strand-to-clip interface. In addition, a spring-loaded chill clamp (not shown) may be used to further aid braze alloy retention. Specifically, the chill clamp would be applied about the strands just behind the clip 16 to establish a temperature differential between the strands inside the clip and the strands outside the clip. The temperature differential aids in containing the flow of braze alloy to areas inside the clip, i.e., it substantially prevents the escape of braze alloy along the strands beyond the back wall 32 of the clip. The joint assembly may be brazed in a controlled gas atmosphere (for example, a gas containing nitrogen, hydrogen and trace amounts of oxygen; or 100% hydrogen), in a chamber to avoid the need for a flux. If desired, a stick-form of the copper-silver alloy may be used to add additional filler material to the braze joint during the brazing process.

When heated to its melting temperature, the braze alloy 26 flows and fills in the spaces between the solid and hollow strands 18, 20 and between the strands and the interior surfaces 24 of the header clip, including at the opening of the header clip into which the strands are inserted. At its melting temperature, the alloy 26 remains sufficiently viscous that it does not flow substantially to the free ends of the hollow strands 20. In other words, the extended length of the hollow strands 20 provides a safety margin in that the excess alloy material will not flow out as far as the ends of the hollow strands, precluding the possibility of plugging the cooling passages in the hollow strands.

The braze joint can be made with the axis of the armature bar in a horizontal or a vertical orientation. The vertical orientation is preferred because it aids alloy retention in the joint and permits pieces of the alloy to be pre-placed on the surface of the assembly inside the hydraulic header clip, thereby providing a source of additional filler metal that will melt and flow over the surface resulting in a thicker layer of filler metal than would be possible with the armature bar in a horizontal orientation.

The essentially phosphorous-free copper-silver alloy can contain one or more other elements, such as tin, zinc or nickel, that can result in solidus and liquid modifications to suit the application. In a less preferred embodiment of the manufacturing method, the brazement may be made in an atmosphere of air or an inert gas, such as nitrogen or argon, with the use of brazing fluxes to avoid the need to braze in a chamber with a controlled atmosphere.

## Claims

1. A brazed joint comprising an armature bar strand package and an end fitting (16) comprising:
a plurality of solid copper strands (18) and a plurality of hollow copper strands (20) arranged in a tiered array and forming the strand package, said plurality of hollow strands (20) having free ends that extend axially beyond corresponding free ends of said solid strands (18);
a cavity (28) in the end fitting (16), accessed by an opening (21), said free ends of said plurality of hollow strands and said corresponding free ends of said solid strands extending through said opening (21) and received in said cavity; and
an essentially phosphorous-free copper-silver braze alloy (26) joining said free ends of said plurality of hollow strands and said corresponding free ends of said plurality of solid strands to each other and to interior surfaces (24) of said end fitting, said braze alloy consisting of copper and silver and optionally one or more of tin, zinc or nickel.

2. The brazed joint of claim 1 wherein said braze alloy (26) covers said free ends of said solid strands (18).

3. The brazed joint of claim 1 further comprising copper shims (30) arranged between one or more tiers of said tiered array.

4. A method of forming a brazed joint between an armature bar (10) and an end fitting (16) comprising:
a) locating ends of a plurality of hollow copper strands (18) and a plurality of solid copper strands (20) within a cavity (20) in an end fitting (16) such that free ends of said hollow strands (18) extend axially beyond free ends of said solid strands (20);
b) pre-placing an essentially phosphorous-free copper-silver braze alloy (26) around and between said ends of said hollow strands and said solid strands such that said braze alloy does not extend axially beyond said free ends of said solid strands, said braze alloy consisting of copper and silver and optionally one or more of tin, zinc or nickel; and
c) brazing the plurality of hollow and solid strands (18, 20) to the end fitting (16).

5. The method of claim 4 wherein said brazing is carried out within a chamber in a controlled gas atmosphere.

## Patentansprüche

1. Lötverbindung, die ein Ankerstabstrangpaket und eine Endarmatur (16) umfasst, umfassend:
mehrere massive Kupferstränge (18) und mehrere hohle Kupferstränge (20), die in einer geschichteten Gruppierung angeordnet sind und das Strangpaket ausbilden, wobei die mehreren hohlen Stränge (20) freie Enden aufweisen, die axial über entsprechende freie Enden der massiven Stränge (18) hinaus verlaufen;
einen Hohlraum (28) in der Endarmatur (16) mit Zugang durch eine Öffnung (21), wobei die freien Enden der mehreren hohlen Stränge und die entsprechenden freien Enden der massiven Stränge durch die Öffnung (21) verlaufen und im Hohlraum aufgenommen sind; und
eine im Wesentlichen phosphorfreie Kupfer-Silber-Lötlegierung (26), die die freien Enden der mehreren hohlen Stränge und die entsprechenden freien Enden der mehreren massiven Stränge miteinander und mit Innenflächen (24) der Endarmatur (24) verbindet, wobei die Lötlegierung aus Kupfer und Silber und optional einem oder mehr von Zinn, Zink oder Nickel besteht.

2. Lötverbindung nach Anspruch 1, wobei die Lötlegierung (26) die freien Enden der massiven Stränge (18) abdeckt.

3. Lötverbindung nach Anspruch 1, ferner umfassend Kupferbeilagen (30), die zwischen einem oder mehr Schichten der geschichteten Gruppierung angeordnet sind.

4. Verfahren zum Ausbilden einer Lötverbindung zwischen einem Ankerstab (10) und einer Endarmatur (16), umfassend:
a) derartiges Anordnen von Enden von mehreren hohlen Kupfersträngen (18) und mehreren massiven Kupfersträngen (20) innerhalb eines Hohlraums (20) in einer Endarmatur (16), dass freie Enden der hohlen Stränge (18) axial über freie Enden der massiven Stränge (20) hinaus verlaufen;
b) derartiges Voranordnen einer im Wesentlichen phosphorfreien Kupfer-Silber-Lötlegierung (26) um und zwischen die Enden der hohlen Stränge und der massiven Stränge, dass die Lötlegierung nicht axial über die freien Enden der massiven Stränge hinaus verläuft, wobei die Lötlegierung aus Kupfer und Silber und optional einem oder mehr von Zinn, Zink oder Nickel besteht; und
c) Löten der mehreren hohlen und massiven Stränge (18, 20) an die Endarmatur (16).

5. Verfahren nach Anspruch 4, wobei das Löten innerhalb einer Kammer in einer geregelten Gasatmosphäre ausgeführt wird.

## Revendications

1. Joint brasé comprenant un paquet de brins de barre d'induit et un raccord d'extrémité (16) comprenant :
une pluralité de brins de cuivre pleins (18) et une pluralité de brins de cuivre creux (20) aménagés en réseau étagé et formant le paquet de brins, ladite pluralité de brins creux (20) ayant des extrémités libres qui s'étendent axialement au-delà d'extrémités libres correspondantes desdits brins pleins (18) ;
une cavité (28) dans le raccord d'extrémité (16) à laquelle on accède par une ouverture (21), lesdites extrémités libres de ladite pluralité de brins creux et lesdites extrémités libres correspondantes desdits brins pleins s'étendant à travers ladite ouverture (21) et étant reçues dans ladite cavité ; et
un alliage de brasage cuivre-argent essentiellement exempt de phosphore (26) joignant lesdites extrémités libres de ladite pluralité de brins creux et lesdites extrémités libres correspondantes de ladite pluralité de brins pleins les unes aux autres et à des surfaces intérieures (24) dudit raccord d'extrémité, ledit alliage de brasage étant constitué de cuivre et d'argent et éventuellement d'un ou plusieurs métaux comme l'étain, le zinc ou le nickel.

2. Joint brasé selon la revendication 1, dans lequel ledit alliage de brasage (26) couvre lesdites extrémités libres desdits brins pleins (18).

3. Joint brasé selon la revendication 1, comprenant en outre des cales de cuivre (30) aménagées entre un ou plusieurs étages dudit réseau étagé.

4. Procédé de formation d'un joint brasé entre une barre d'induit (10) et un raccord d'extrémité (16), comprenant les étapes consistant à :
a) localiser les extrémités d'une pluralité de brins de cuivre creux (18) et d'une pluralité de brins de cuivre pleins (20) dans une cavité (20) d'un raccord d'extrémité (16) de sorte que les extrémités libres desdits brins creux (18) s'étendent axialement au-delà des extrémités libres desdits brins pleins (20) ;
b) placer préalablement un alliage de brasage cuivre-argent essentiellement exempt de phosphore (26) autour desdites extrémités desdits brins creux et desdits brins pleins et entre celles-ci de sorte que ledit alliage de brasage ne s'étende pas axialement au-delà desdites extrémités libres desdits brins pleins, ledit alliage de brasage étant constitué de cuivre et d'argent et éventuellement d'un ou plusieurs métaux comme l'étain, le zinc ou le nickel ; et
c) braser la pluralité de brins creux et pleins (18, 20) au raccord d'extrémité (16).

5. Procédé selon la revendication 4, dans lequel ledit brasage est effectué dans une chambre sous atmosphère de gaz contrôlée.
